# EUROPEAN PATENT APPLICATION

(11) **EP 4 645 964 A1**
(43) Date of publication of application: **05.11.2025**
(21) Application number: 23910331.0
(22) Date of filing: 21.12.2023
(51) Int. Cl.: H04W 52/02

(54) **INFORMATION TRANSMISSION METHOD AND APPARATUS, AND DEVICE**

(30) Priority: 30.12.2022 CN 202211722731
(71) Applicant: Datang Mobile Communications Equipment Co., Ltd., Beijing 100085 (CN)
(72) Inventor: WU, Lichen, Beijing 100085 (CN); HUANG, Yuanfang, Beijing 100085 (CN); SUN, Huiqing, Beijing 100085 (CN)
(74) Representative: Studio Torta S.p.A.
(86) International application number: PCT/CN2023/140545
(87) International publication number: WO 2024/140403

(57) **Abstract**

An information transmission method and apparatus, and a device are provided. The information transmission method includes: transmitting first information related to energy-saving to a second SRO device by means of a target interface, wherein the target interface is a transmission interface between a first SRO device and the second SRO device.

## Description

### CROSS-REFERENCE TO RELATED APPLICATION

The present disclosure claims the priority of Chinese Patent Application No. 202211722731.8 entitled "Information Transmission Method and Apparatus, and Device" filed on December 30, 2022 before CNIPA, the disclosure of which is hereby incorporated by reference in its entirety.

### TECHNICAL FIELD

The present disclosure relates to the field of communications technologies, and in particular, to an information transmission method, apparatus, and device.

### BACKGROUND

A Radio Access Network (RAN) is a main part of energy consumption in a mobile network, and an Open Radio Access Network Radio Unit (O-RU) is a component consuming the largest proportion in energy consumption of the RAN. An Open Radio Access Network (O-RAN) currently discusses and defines a process related to smart energy-saving and information flow, and mainly aims at a general deployment scenario, a deployment scenario of a shared O-RU, especially a scenario of O-RU being shared by multiple operators, does not involve or explicitly define, which results in that each shared resource operator (SRO) can only consider its own energy-saving related information when deploying an energy-saving solution, which cannot ensure the rationality of the energy-saving solution.

On the basis of the above, the related art cannot ensure the rationality of the energy-saving solution for a scenario in which the O-RU is shared.

### SUMMARY

An objective of the present disclosure is to provide an information transmission method, apparatus and device, so as to solve the problem in the related art that the rationality of an energy-saving solution cannot be ensured for a scenario in which an O-RU is shared.

In order to address the above technical problem, an information transmission method applied to a first shared resource operator (SRO) device is provided. The method includes: sending first information related to energy-saving to a second SRO device via a target interface; wherein the target interface is a transmission interface between the first SRO device and the second SRO device.

Optionally, the method further includes: establishing a connection of the target interface with the second SRO device in a first manner; wherein the first manner includes: sending a first setup request to the second SRO device, and receiving a first setup response from the second SRO device; and/or receiving a second setup request from the second SRO device, and sending a second setup response to the second SRO device.

Optionally, the method further includes: releasing the connection of the target interface with the second SRO device in a second manner; wherein the second manner includes: sending a first release request to the second SRO device, and receiving a first release response from the second SRO device; and/or receiving a second release request from the second SRO device, and sending a second release response to the second SRO device.

Optionally, the first information includes at least one of the following: request information for energy-saving measurement data collection; response information for artificial intelligence (AI) model upload; request information for AI model download; response information for energy-saving policy coordination; request information for energy-saving policy download; notification information for energy-saving policy deployment.

Optionally, the method further includes: receiving second information from the second SRO device via the target interface; wherein the second information is response information or request information for the first information.

Optionally, the second information includes at least one of the following: response information for energy-saving measurement data collection; request information for AI model upload; response information for AI model download; request information for energy-saving policy coordination; response information for energy-saving policy download.

An information transmission method applied to a second SRO device is further provided in the embodiments of the present disclosure. The method includes: receiving first information related to energy-saving from a first SRO device via a target interface; wherein the target interface is a transmission interface between the first SRO device and the second SRO device.

Optionally, the method further includes: establishing a connection of the target interface with the first SRO device in a first manner; wherein the first manner includes: receiving a first setup request from the first SRO device, and sending a first setup response to the first SRO device; and/or sending a second setup request to the first SRO device, and receiving a second setup response from the first SRO device.

Optionally, the method further includes: releasing the connection of the target interface with the first SRO device in a second manner; wherein the second manner includes: receiving a first release request from the first SRO device, and sending a first release response to the first SRO device; and/or sending a second release request to the first SRO device, and receiving a second release response from the first SRO device.

Optionally, the first information includes at least one of the following: request information for energy-saving measurement data collection; response information for artificial intelligence (AI) model upload; request information for AI model download; response information for energy-saving policy coordination; request information for energy-saving policy download; notification information for energy-saving policy deployment.

Optionally, the method further includes: sending second information to the first SRO device via the target interface; wherein the second information is response information or request information for the first information.

Optionally, the second information includes at least one of the following: response information for energy-saving measurement data collection; request information for AI model upload; response information for AI model download; request information for energy-saving policy coordination; response information for energy-saving policy download.

An information transmission apparatus applied to a first shared resource operator (SRO) device is further provided in the embodiments of the present disclosure. The apparatus includes: a memory, a transceiver, and a processor, wherein the memory is configured to store a computer program; the transceiver is configured to send and receive data under the control of the processor; and the processor is configured to read the computer program in the memory and perform operations including: sending, by using the transceiver, first information related to energy-saving to a second SRO device via a target interface; wherein the target interface is a transmission interface between the first SRO device and the second SRO device.

Optionally, the operations further include: establishing a connection of the target interface with the second SRO device in a first manner; wherein the first manner includes: sending a first setup request to the second SRO device, and receiving a first setup response from the second SRO device; and/or receiving a second setup request from the second SRO device, and sending a second setup response to the second SRO device.

Optionally, the operations further include: releasing the connection of the target interface with the second SRO device in a second manner; wherein the second manner includes: sending a first release request to the second SRO device, and receiving a first release response from the second SRO device; and/or receiving a second release request from the second SRO device, and sending a second release response to the second SRO device.

Optionally, the first information includes at least one of the following: request information for energy-saving measurement data collection; response information for artificial intelligence (AI) model upload; request information for AI model download; response information for energy-saving policy coordination; request information for energy-saving policy download; notification information for energy-saving policy deployment.

Optionally, the operations further include: receiving second information from the second SRO device via the target interface by using the transceiver; wherein the second information is response information or request information for the first information.

Optionally, the second information includes at least one of the following: response information for energy-saving measurement data collection; request information for AI model upload; response information for AI model download; request information for energy-saving policy coordination; response information for energy-saving policy download.

An information transmission apparatus applied to a second SRO device is further provided in the embodiments of the present disclosure. The apparatus includes: a memory, a transceiver, and a processor, wherein the memory is configured to store a computer program; the transceiver is configured to send and receive data under the control of the processor; and the processor is configured to read the computer program in the memory and perform operations including: receiving first information related to energy-saving from a first SRO device via a target interface by using the transceiver; wherein the target interface is a transmission interface between the first SRO device and the second SRO device.

Optionally, the operations further include: establishing a connection of the target interface with the first SRO device in a first manner; wherein the first manner includes: receiving a first setup request from the first SRO device, and sending a first setup response to the first SRO device; and/or sending a second setup request to the first SRO device, and receiving a second setup response from the first SRO device.

Optionally, the operations further include: releasing the connection of the target interface with the first SRO device in a second manner; wherein the second manner includes: receiving a first release request from the first SRO device, and sending a first release response to the first SRO device; and/or sending a second release request to the first SRO device, and receiving a second release response from the first SRO device.

Optionally, the first information includes at least one of the following: request information for energy-saving measurement data collection; response information for artificial intelligence (AI) model upload; request information for AI model download; response information for energy-saving policy coordination; request information for energy-saving policy download; notification information for energy-saving policy deployment.

Optionally, the operations further include: sending second information to the first SRO device via the target interface by using the transceiver; wherein the second information is response information or request information for the first information.

Optionally, the second information includes at least one of the following: response information for energy-saving measurement data collection; request information for AI model upload; response information for AI model download; request information for energy-saving policy coordination; response information for energy-saving policy download.

An information transmission apparatus applied to a first shared resource operator (SRO) device is further provided in the embodiments of the present disclosure. The apparatus includes: a first sending unit, configured to send first information related to energy-saving to a second SRO device via a target interface; wherein the target interface is a transmission interface between the first SRO device and the second SRO device, wherein the target interface is a transmission interface between the first SRO device and the second SRO device.

Optionally, the apparatus further includes: a first establishing unit, configured to establish a connection of the target interface with the second SRO device in a first manner; wherein the first manner includes: sending a first setup request to the second SRO device, and receiving a first setup response from the second SRO device; and/or receiving a second setup request from the second SRO device, and sending a second setup response to the second SRO device.

Optionally, the apparatus further includes: a first releasing unit, configured to release the connection of the target interface with the second SRO device in a second manner; wherein the second manner includes: sending a first release request to the second SRO device, and receiving a first release response from the second SRO device; and/or receiving a second release request from the second SRO device, and sending a second release response to the second SRO device.

Optionally, the first information includes at least one of the following: request information for energy-saving measurement data collection; response information for artificial intelligence (AI) model upload; request information for AI model download; response information for energy-saving policy coordination; request information for energy-saving policy download; notification information for energy-saving policy deployment.

Optionally, the apparatus further includes: a first receiving unit, configured to receive second information from the second SRO device via the target interface; wherein the second information is response information or request information for the first information.

Optionally, the second information includes at least one of the following: response information for energy-saving measurement data collection; request information for AI model upload; response information for AI model download; request information for energy-saving policy coordination; response information for energy-saving policy download.

An information transmission apparatus applied to a second SRO device is further provided in the embodiments of the present disclosure. The apparatus includes: a second receiving unit, configured to receive first information related to energy-saving from a first SRO device via a target interface; wherein the target interface is a transmission interface between the first SRO device and the second SRO device.

Optionally, the apparatus further includes: a second setup unit, configured to establish a connection of the target interface with the first SRO device in a first manner; wherein the first manner includes: receiving a first setup request from the first SRO device, and sending a first setup response to the first SRO device; and/or sending a second setup request to the first SRO device, and receiving a second setup response from the first SRO device.

Optionally, the apparatus further includes: a second releasing unit, configured to release the connection of the target interface with the first SRO device in a second manner; wherein the second manner includes: receiving a first release request from the first SRO device, and sending a first release response to the first SRO device; and/or sending a second release request to the first SRO device, and receiving a second release response from the first SRO device.

Optionally, the first information includes at least one of the following: request information for energy-saving measurement data collection; response information for artificial intelligence (AI) model upload; request information for AI model download; response information for energy-saving policy coordination; request information for energy-saving policy download; notification information for energy-saving policy deployment.

Optionally, the apparatus further includes: a second sending unit, configured to send second information to the first SRO device via the target interface; wherein the second information is response information or request information for the first information.

Optionally, the second information includes at least one of the following: response information for energy-saving measurement data collection; request information for AI model upload; response information for AI model download; request information for energy-saving policy coordination; response information for energy-saving policy download.

A processor-readable storage medium storing a computer program, wherein the computer program is configured to cause a processor to perform the information transmission method according to the above.

The above technical solution of the present disclosure has the following beneficial effects. In the foregoing solutions, the information transmission method includes following steps: sending first information related to energy-saving to the second SRO device by using the target interface; the target interface is a transmission interface between the first SRO device and the second SRO device; transmission of information related to energy-saving between the SRO devices in a shared O-RU scenario can be supported, thereby ensuring that the energy-saving solutions can be determined by considering the energy-saving information of the SRO and other SROs, ensuring the rationality of the energy-saving solution in the shared O-RU scenario, and well solving the problem in the related art that the rationality of the energy-saving solution cannot be ensured for a shared O-RU scenario.

### BRIEF DESCRIPTION OF THE DRAWINGS

FIG. 1 is a schematic architectural diagram of a wireless communication system according to an embodiment of the present disclosure;
FIG. 2 is a first schematic flowchart of an information transmission method according to an embodiment of the present disclosure;
FIG. 3 is a second schematic flowchart of an information transmission method according to an embodiment of the present disclosure;
FIG. 4 is a first schematic diagram of an energy-saving reference architecture of a scenario in which multiple operators share O-RU according to an embodiment of the present disclosure;
FIG. 5 is a second schematic diagram of an energy-saving reference architecture of a scenario in which multiple operators share O-RU according to an embodiment of the present disclosure;
FIG. 6 is a third schematic diagram of an energy-saving reference architecture of a scenario in which multiple operators share O-RU according to an embodiment of the present disclosure;
FIG. 7 is a schematic diagram of an I1 interface connection setup process according to an embodiment of the present disclosure;
FIG. 8 is a schematic diagram of an I1 interface connection release process according to an embodiment of the present disclosure;
FIG. 9 is a schematic diagram of an energy-saving measurement data collection process according to an embodiment of the present disclosure;
FIG. 10 is a schematic diagram of an AI model upload process according to an embodiment of the present disclosure;
FIG. 11 is a schematic diagram of an AI model download process according to an embodiment of the present disclosure;
FIG. 12 is a schematic diagram of an energy-saving policy coordination process according to an embodiment of the present disclosure;
FIG. 13 is a schematic diagram of an energy-saving policy download process according to an embodiment of the present disclosure;
FIG. 14 is a schematic diagram of an energy-saving policy notification process according to an embodiment of the present disclosure;
FIG. 15 is a first schematic structural diagram of an information transmission apparatus according to an embodiment of the present disclosure;
FIG. 16 is a second schematic structural diagram of an information transmission apparatus according to an embodiment of the present disclosure;
FIG. 17 is a first schematic structural diagram of an information transmission apparatus according to an embodiment of the present disclosure;
FIG. 18 is a second schematic structural diagram of an information transmission apparatus according to an embodiment of the present disclosure.

### DETAILED DESCRIPTION

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The technical solutions provided in the embodiments of the present disclosure may be applied to various systems, especially a 5th Generation Mobile Communication Technology (5G) system. For example, the applicable system may be a Global System of Mobile Communication (GSM) system, a Code Division Multiple Access (CDMA) system, a Wideband Code Division Multiple Access (WCDMA) system, a Long Term Evolution (LTE) system, a Long Term Evolution Advanced (LTE-A) system, a Universal Mobile Telecommunication System (UMTS), a Worldwide Interoperability for Microwave Access (LTE-A) system, a 5G new radio (NR) system, and the like. The plurality of systems each include a terminal device and a network device. The system may further include a core network part, for example, an Evolved Packet System (EPS), a 5G system (5G System, 5 GS), and the like.

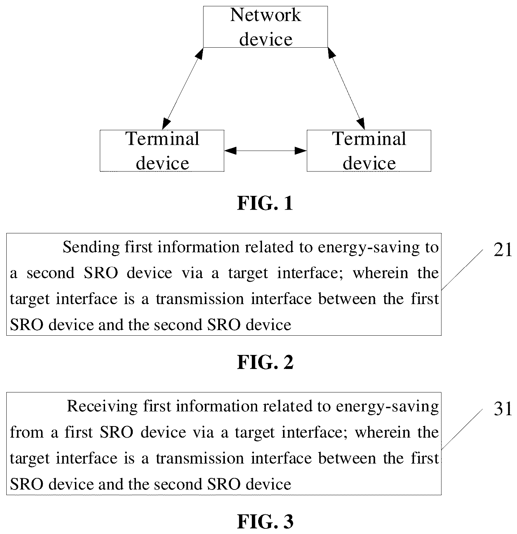

FIG. 1 is a block diagram of a wireless communication system to which an embodiment of the present disclosure may be applied. The wireless communication system includes a terminal device and a network device.

The terminal device in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in the embodiments of the present disclosure may be a network device (a Base Transceiver Station, BTS) in a Global System for Mobile Communications (GSM) or a Code Division Multiple Access (Code Division Multiple Access, CDMA), or may be a NodeB in a Wide-band Code Division Multiple Access (WCDMA), or may be an evolved network device (evolutional NodeB, eNB or e-NodeB) in a a Long Term Evolution (LTE) system, a 5G base station (gNB) in a next generation system, or a Home evolved Node B (HeNB), a relay node, a home base station (Femto), a pico base station (Pico), or the like, which are not limited in the embodiments of the present disclosure. In some network structures, the network device may include a centralized unit (CU) node and a distributed unit (DU) node, and the centralized unit and the distributed unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). The MIMO transmission may be a two-dimensional MIMO antenna (2D-MIMO), a three-dimensional MIMO antenna (3D-MIMO), a full dimension MIMO antenna (full dimension, FD-MIMO) or a super-large-scale MIMO antenna (Massive-MIMO), or may be diversity transmission or precoding transmission or beamforming transmission, according to the form and quantity of the root antenna combination.

The following first describes the content involved in the solutions provided in the embodiments of the present disclosure.

The difference between the O-RAN architecture and the RAN architecture in the 3GPP is to split the DU (distributed unit) into an open radio access network distributed unit (O-DU) and an O-RU by using an option (option) 7-2X, and an Open FrontHaul Interface (OpenFH) is added. The management plane (OFH-MP) of the open fronthaul interface supports two architecture models:
(1) Hierarchical Model: O-RU is managed by one or more O-DUs;
(2) Hybrid Model: in addition to the O-DU, the O-RU also supports management through one or more management systems.

The shared O-RU is a characteristic of key attention of the O-RAN, and five typical deployment scenarios of the shared O-RU are discussed in the O-RAN, and includes: an Open Fronthaul Hybrid and Hierarchical Deployment of the same operator, and a deployment scenario of a multi-operator Open Fronthaul Hybrid, Hierarchical and Neutral Host.

Specifically, the deployment of the shared O-RU provides capability enhancement for the O-RAN. Deployment of sharing an O-RU by the same operator may enhance scalability, availability, and access-specific node deployment for a particular access node; and the deployment of sharing the O-RU by multiple operators enhances sharing and/or multiplexing capabilities of the system, and provides a new option for RAN sharing, so as to reduce network deployment costs and improve network capacity and coverage.

In a deployment scenario of sharing the O-RU by multiple operators, an operator may have different roles: Shared Resource Operator-Host (SRO-H) is responsible for operating the shared O-RU, shared resource operator-tenants (SRO-T) are responsible for operating the O-DU, and a Shared Resource Operator-Neutral Host (SRO-NH) operates the O-RU in a neutral host manner, and it should be noted that the SRO-H may also run its O-DU and O-CU functions.

Network Energy Saving (NES) is also a key characteristic in O-RAN. By means of AI/ML (Artificial Intelligence and Machine Learning) technology, various solutions for energy-saving are formed for switching and controlling different components of the network at different time granularities, and the energy-saving solutions discussed at present are roughly classified into four types: Carrier and cell Switch Off on ES, Radio Frequency Channel switch off on ES, Advanced Sleep Mode ES, and Cloud resource energy saving Mode ES.

In the network energy-saving characteristic of the O-RAN, how to measure and collect data, train and deploy an AI/ML model, infer and determine an energy-saving policy, and execute a related policy configuration for each component in the O-RAN system have general discussion and definition. For example, for energy saving of a carrier/cell switch, a scenario in which whether AI/ML inference is deployed in a Non-RT RIC (Non-Real-Time Radio Intelligent Controller) or a Near-RT RIC (Near Real-Time Radio Intelligent Controller) is distinguished, and a process related to smart energy-saving and a related information flow exchange method are defined.

In addition, in the scenario in which the Shared Resource Operators (SROs) share an O-RU, since the management and control of the O-RU resources relate to a plurality of operators, when the energy-saving policies of the operators may affect each other, if the SROs can exchange information related to smart energy-saving and apply the information to the smart energy-saving process of the shared O-RU, the energy-saving support capability of the SRO can be expanded, and a smart energy-saving scheme is deployed in a wider scenario to better exert the application effect of the energy-saving solution. However, in the current O-RAN-related specification, there is no explicit provision or solution for the method for transmitting and exchanging information related to smart energy-saving between SROs.

Based on the foregoing, embodiments of the present disclosure provide an information transmission method, apparatus, and device, to resolve a problem in the related art that the rationality of an energy-saving scheme cannot be ensured for a scenario in which an O-RU is shared. The method, the apparatus, and the device are based on the same application concept, and because the method, the apparatus, and the device solve a similar principle of a problem, the implementation of the method, the apparatus, and the device may be referred to each other, and details are not described herein again.

The information transmission method provided in the embodiments of the present disclosure is applied to a first shared resource operator (SRO) device, as shown in FIG. 2, the method includes following steps.

Step 21: sending first information related to energy-saving to a second SRO device via a target interface; wherein the target interface is a transmission interface between the first SRO device and the second SRO device.

The first SRO device may be implemented as SRO-NH or SRO-H, and the second SRO device may be implemented as SRO-T, but is not limited thereto.

According to the information transmission method provided in the embodiments of the present disclosure, the first information related to energy-saving is sent to the second SRO device by using the target interface; the target interface is a transmission interface between the first SRO device and the second SRO device; transmission of information related to energy-saving between the SRO devices in a shared O-RU scenario can be supported, thereby ensuring that the energy-saving solutions can be determined by considering the energy-saving information of the SRO and other SROs, ensuring the rationality of the energy-saving solution in the shared O-RU scenario, and well solving the problem in the related art that the rationality of the energy-saving solution cannot be ensured for a shared O-RU scenario.

Further, the information transmission method further includes: establishing a connection of the target interface with the second SRO device in a first manner; wherein the first manner includes at least one of following: (1) sending a first setup request to the second SRO device, and receiving a first setup response from the second SRO device; (2) receiving a second setup request from the second SRO device, and sending a second setup response to the second SRO device.

In this way, the connection of the target interface can be set up in multiple manners.

In an embodiment of the present disclosure, the information transmission method further includes: releasing the connection of the target interface with the second SRO device in a second manner; wherein the second manner includes at least one of following: (1) sending a first release request to the second SRO device, and receiving a first release response from the second SRO device; (2) receiving a second release request from the second SRO device, and sending a second release response to the second SRO device.

In this way, the connection of the target interface can be released in multiple manners.

The first information includes at least one of the following: request information for energy-saving measurement data collection; response information for artificial intelligence (AI) model upload; request information for AI model download; response information for energy-saving policy coordination; request information for energy-saving policy download; notification information for energy-saving policy deployment.

In this way, multi-stage information interaction can be realized, and the energy-saving capability of the SRO supporting the network can be expanded.

Further, the information transmission method further includes: receiving second information from the second SRO device via the target interface; wherein the second information is response information or request information for the first information.

In this way, information transmission between the SRO devices in the shared O-RU scenario may be further supported.

The second information includes at least one of the following: response information for energy-saving measurement data collection; request information for AI model upload; response information for AI model download; request information for energy-saving policy coordination; response information for energy-saving policy download.

In this way, interaction of multi-stage information can be further supported, and the energy-saving capability of the SRO supporting the network is expanded.

An embodiment of the present disclosure further provides an information transmission method applied to a second SRO device, as shown in FIG. 3, the method includes following steps.

Step 31: receiving first information related to energy-saving from a first SRO device via a target interface; wherein the target interface is a transmission interface between the first SRO device and the second SRO device.

The first SRO device may be implemented as SRO-NH or SRO-H, and the second SRO device may be implemented as SRO-T, but is not limited thereto.

According to the information transmission method provided in the embodiments of the present disclosure, the first information related to energy-saving from the first SRO device is received by using the target interface; the target interface is a transmission interface between the first SRO device and the second SRO device; transmission of information related to energy-saving between the SRO devices in a shared O-RU scenario can be supported, thereby ensuring that the energy-saving solutions can be determined by considering the energy-saving information of the SRO and other SROs, ensuring the rationality of the energy-saving solution in the shared O-RU scenario, and well solving the problem in the related art that the rationality of the energy-saving solution cannot be ensured for a shared O-RU scenario.

Further, the information transmission method further includes: establishing a connection of the target interface with the first SRO device in a first manner; wherein the first manner includes at least one of following: (1) receiving a first setup request from the first SRO device, and sending a first setup response to the first SRO device; (2) sending a second setup request to the first SRO device, and receiving a second setup response from the first SRO device.

In this way, the connection of the target interface can be set up in multiple manners.

In an embodiment of the present disclosure, the information transmission method further includes: releasing the connection of the target interface with the first SRO device in a second manner; wherein the second manner includes at least one of following: (1) receiving a first release request from the first SRO device, sending a first release response to the first SRO device; (2) sending a second release request to the first SRO device, and receiving a second release response from the first SRO device.

In this way, the connection of the target interface can be released in multiple manners.

The first information includes at least one of the following: request information for energy-saving measurement data collection; response information for artificial intelligence (AI) model upload; request information for AI model download; response information for energy-saving policy coordination; request information for energy-saving policy download; notification information for energy-saving policy deployment.

In this way, multi-stage information interaction can be realized, and the energy-saving capability of the SRO supporting the network can be expanded.

Further, the information transmission method further includes: sending second information to the first SRO device via the target interface; wherein the second information is response information or request information for the first information.

In this way, information transmission between the SRO devices in the shared O-RU scenario may be further supported.

The second information includes at least one of the following: response information for energy-saving measurement data collection; request information for AI model upload; response information for AI model download; request information for energy-saving policy coordination; response information for energy-saving policy download.

In this way, interaction of multi-stage information can be further supported, and the energy-saving capability of the SRO supporting the network is expanded.

The following describes the information transmission method provided in the embodiments of the present disclosure, where the first SRO device being SRO-NH or SRO-H is used as an example, and the second SRO device being SRO-T is used as an example.

When considering the above technical problems, and considering that both Network Energy Saving (NES) and Shared O-RU (Open Radio Access Network Radio Frequency unit) are focused by O-RAN, the embodiments of the present disclosure provide an information transmission method, which may be specifically implemented as a method for transmitting information related to smart energy-saving between shared resource operators (SROs), and may also be referred to as a method for transmitting information related to smart energy-saving between operators in deployment scenario in which a resource operator (O-RU) is shared by multiple operators, which relates to transmission of measurement data related to energy-saving, AI (artificial intelligence) model, energy-saving policy, and related information between shared resource operators (SRO) of the O-RAN, thereby expanding the energy-saving capability of the SRO supporting the network.

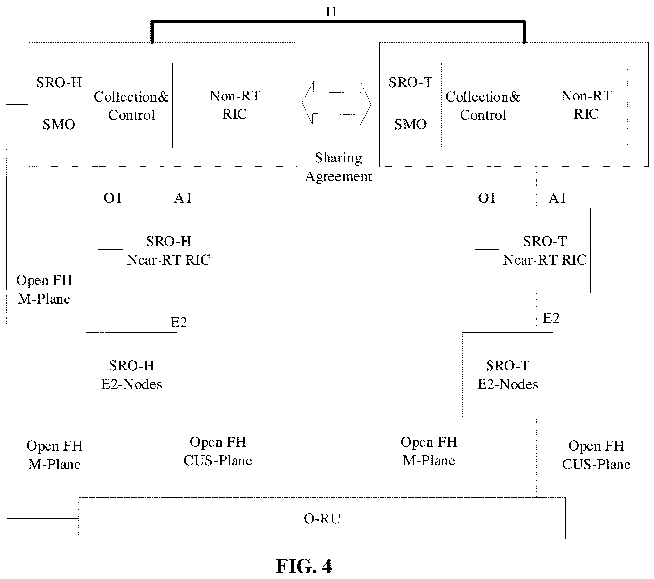

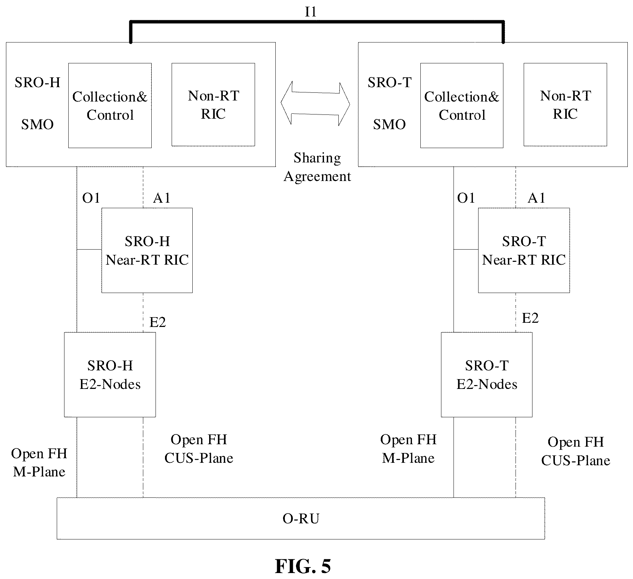

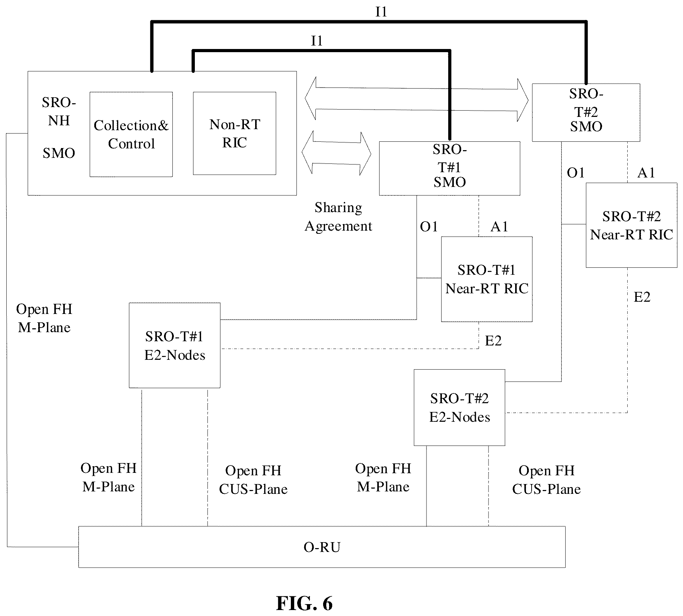

Specifically, in this solution, mainly for a deployment scenario in which O-RU is shared by multiple operators, a method for transmitting information related to smart energy-saving between shared resource operators (SROs) is provided, and a brief reference architecture thereof may be as shown in FIG. 4 to FIG. 6 (an energy-saving reference architecture of a scenario in which multiple operators share the O-RU), wherein, in FIG. 4 to FIG. 6, an I1 interface (corresponding to the target interface) is added between SMO (service management orchestration) of different SROs (shared resource operators), which is a newly added interface in this technical solution. In addition, for ease of description, the O-CU (open radio access network O-RAN centralized unit) and the O-DU (open radio access network O-RAN distributed unit) are combined into E2-Nodes (nodes), which are consistent with the general process description of the energy saving characteristics in the O-RAN specification. Wherein, Collection & Control in the figure represents collection and control, SMO represents service management orchestration, Non-RT RIC represents a non-real-time radio intelligent controller, Near-RT RIC represents a near real-time radio intelligent controller, Open FH M-Plane represents an open fronthaul interface management (plane) plane, Open FH/CUS-plane represents an open fronthaul interface control user synchronization (plane) plane, O1, A1, and E 2 represent corresponding interfaces (O 1 represents an interface between a managed unit and a management entity of the O-RAN, A1 represents an interface between a non-real-time radio intelligent controller and a near real-time radio intelligent controller in SMO, and E2 represents a logical interface connected between a near real-time radio intelligent controller and an E2 node). In this solution, by means of the newly added I1 interface, energy-saving related training and inference data collection, AI model transmission, energy-saving policy transmission, policy coordination information transmission, and notification of execution of feedback information and other information related to smart energy-saving may be completed between the shared resource operator SROs.

Specifically, the related process of the newly added I1 interface in this solution may be shown in Table 1 below:

**TABLE 1. I1 Interface Process**

| I1 interface process | Initiating end | Peer end | Interface description |
|---|---|---|---|
| I1 interface connection setup (I1 Setup) | SRO-NH or SRO-H | SRO-T | Setup I1 interface connection, all of SRO-NH (Shared Resource Operator-Neutral Hosts) , SRO-H (Shared Resource Operator-Host) or SRO-T (Shared Resource Operator-Tenants) may initiate an I1 interface connection setup process |
| | SRO-T | SRO-NH or SRO-H | |
| I1 interface connection release (I1 Release) | SRO-NH or SRO-H | SRO-T | Release an I1 interface connection, all of SRO-NH, SRO-H or SRO-T may initiate the I1 interface connection release process |
| | SRO-T | SRO-NH or SRO-H | |
| ES Measurement Data Collection | SRO-NH or SRO-H | SRO-T | Energy-saving (ES) measurement data connection, used for collection and upload of ES-related measurement data of AI training and/or reasoning |
| AI Model Upload | SRO-T | SRO-NH or SRO-H | AI mode upload, used for a distributed training scene, distributed nodes (SRO-T) upload locally-training modes to a central node (SRO-NH or SRO-H) |
| AI Model Download | SRO-NH or SRO-H | SRO-T | AI model download, used for a distributed training scene, a central node (SRO-NH or SRO-H) sends a summarized mode to distributed nodes (SRO-T) |
| ES Policy Coordination | SRO-T | SRO-NH or SRO-H | ES policy coordination, used by SRO-T to send a request for coordination and optimization to SRO-NH or SRO-H. The policy after coordination and optimization may be distributed to SRO-T, or be deployed and executed through direct download from SRO-NH and SRO-H, which is dependent on implementation |
| ES Policy Download | SRO-NH or SRO-H | SRO-T | download of the ES policy, used by SRO-NH or SRO-H to send the ES policy to SRO-T, the policy may be an optimized policy after coordination |
| ES Policy Notification | SRO-NH or SRO-H | SRO-T | ES policy notification, used by SRO-NH or SRO-H to feed back a deployment condition of the ES policy to SRO-T, when the deployment condition of the ES policy is directly distributed by the SRO-NH or SRO-H |

The SRO-NH, SRO-H, and SRO-T in the above table are SMOs of a corresponding type of SRO, and for brevity, the I1 interface-related part adopts the above-mentioned simplified identification mode, which is not repeatedly described subsequently.

The process of each interface in Table 1 is described in detail below.

First, it should be noted that:
1) interface processes and embodiments are all exemplary properties, wherein: process naming, parameter information, and service processing logic may be implemented differently;
2) the transport protocol of the interface is not limited, and HTTP, NETCONF (network configuration), a self-defined protocol, etc. may be used, but it is recommended to be implemented based on a secure transport layer protocol, such as TLS, SSH, etc.
3) the serialization mode of the transmission message in the interface process may adopt JSON, XML, Protobuf, etc. depending on the specific implementation;
4) The definition part of message formats of each process in the interface only focuses on the function-related part, that is, the message body part, and the common message header part is not embodied. For example, information usually placed on an identification message service of a common message header portion is "AI model download" or "energy-saving policy coordination", and the identification message action is a request, a response or a notification information, information identifying a user or a connection validity (for example, a token or a session identifier ID), information for distinguishing different message sequence numbers (Message ID) of the same message function, and the like, and is not included in a message format definition of an interface process;
5) Each process in the interface reflects an energy-saving function-related definition, and in practical applications, the I1 interface may be expanded as required to support a wider range of functions.

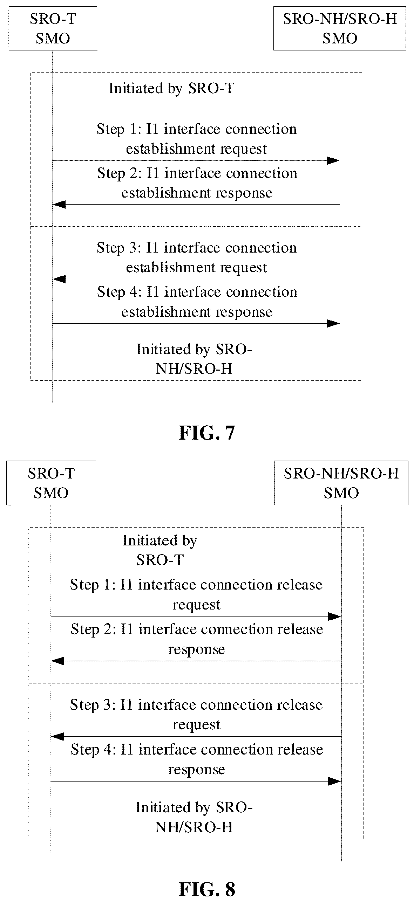

I. I1 Interface Procedure 1: I1 Interface Connection Setup Procedure (I1 Setup);
SRO-NH, SRO-H, or SRO-T may all initiate an I1 interface connection setup process, and the I1 interface connection setup process is shown in FIG. 7;
if an I1 interface connection setup is initiated by the SRO-T, the process is as follows:
   Step 1: SRO-T sends an I1 interface connection setup request (I1 setup request, corresponding to the second setup request) to SRO-NH/SRO-H (that is, SRO-NH or SRO-H), where the request at least carries an SRO identifier (SRO ID). Optionally, authentication information may be carried, for example, a user name, a password, or the like;
   Step 2: the SRO-NH/SRO-H returns an I1 interface connection setup response message (corresponding to the second setup response) to the SRO-T. If the interface connection is successfully set up, the response message carries the RESULT (the result) is SUCCESS (success), and carries the session ID (Session ID); if the interface connection fails, the response message carries the Result (failure) and carries the reason for failure, for example, an Access Denied, Internal Error, etc.

If I1 interface connection setup is initiated by SRO-NH/SRO-H, the process is as follows:
Step 3: the SRO-NH/SRO-H sends an I1 interface connection setup request (I1 setup request, corresponding to the first setup request) to SRO-T, where the request at least carries an SRO identifier (SRO ID). Optionally, authentication information may be carried, for example, a user name, a password, or the like;
Step 4: the SRO-T returns an I1 interface connection setup response message (corresponding to the first setup response) to the SRO-NH/SRO-H. If the interface connection is successfully set up, the response message carries the RESULT being SUCCESS and carries the session ID (Session ID); if the interface connection is unsuccessfully set up, the response message carries the Result being Failure and carries the reason for failure, for example, an Access Denied, Internal Error, etc.

Embodiment 1: the I1 Interface Connection Setup Procedure (I1 Setup) embodiment;
One possible definition manner of the I1 interface connection setup process message format is:

| I1 interface connection setup request (I1 setup request) | | | |
|---|---|---|---|
| Information Element | Option | Quantity | Description |
| SRO ID | Required | 1 | SRO identifier |
| Authentication Info | Optional | 0..1 | Authentication information, where the authentication information is related to an application authentication method, for example, user name and/or password authentication, Token verification, OAth (Open Authorization), self-defined, only an example connection setup process is shown here, and the present disclosure is not limited to a specific connection setup process, and the authentication information may be constructed or implemented in different ways. |

| I1 interface connection setup response (I1 Setup response) | | | |
|---|---|---|---|
| Information Element | Option | Quantity | Description |
| Result | Required | 1 | Result of I1 interface connection setup |
| | | | Value is success or failure. |
| Session ID | Conditionally optional | 0..1 | session ID this information element is required when the I1 interface connection setup is successful. |
| Reason | Conditionally optional | 0..1 | Reason of I1 interface connection setup failure |
| | | | This information element is required when the I1 interface connection setup fails; |
| | | | the value is for example: access denied, internal error, and the like |

In an example in which the SRO-T initiates the interface connection setup process with SRO-NH/SRO-H, the SRO-T sends an I1 interface connection setup request to the SRO-NH/SRO-H, an authentication manner of a user name and a password is used.

If the setup of the connection is successful, the response message further carries the session ID of 0x12345678. The message interaction in the setup process of as follows:

| I1 interface connection setup request (I1 setup request) | | | |
|---|---|---|---|
| Information Element | Option | Quantity | value |
| SRO ID | Required | 1 | 456 |
| Authentication Info | Optional | 0..1 | |
| >user | Optional | 1 | testuser |
| >password | Optional | 1 | testpwd |

| Ilinterface connection setup response (I1 Setup response) | | | |
|---|---|---|---|
| Information Element | Option | Quantity | value |
| Result | Required | 1 | success |
| Session ID | Conditionally optional | 0..1 | 0x12345678 |

If the setup of the connection fails, the response message further carries a failure reason, for example, Access Denied. Message interaction in the setup process may be as follows:

| I1 interface connection setup request (I1 setup request) | | | |
|---|---|---|---|
| Information Element | Option | Quant ity | value |
| SRO ID | Required | 1 | 456 |
| Authentication Info | Optional | 0..1 | |
| >user | Optional | 1 | testuser |
| >password | Optional | 1 | testpwd |

| Ilinterface connection setup response (I1 Setup response) | | | |
|---|---|---|---|
| Information Element | Option | Quant ity | value |
| Result | Required | 1 | failure |
| Reason | Conditionall y optional | 0..1 | Access denied |

**II.** I1 Interface Process 2: I1 Interface Connection Release Process (I1 Release);
Each of SRO-NH, SRO-H, or SRO-T may initiate an I1 interface connection release process, and an I1 interface connection release process is shown in FIG. 8;
If an I1 interface connection release is initiated by the SRO-T, the process is as follows:
   Step 1: SRO-T sends an I1 interface connection release request (I1 Release Request, corresponding to the second release request) to SRO-NH/SRO-H, and optionally, the request may carry a release cause ReleaseReason, for example, equipment maintenance (Equipment Maintenance), network optimization (Network Optimization), and the like;
   Step 2: the SRO-NH/SRO-H returns an I1 interface connection release response message (corresponding to the second release response) to the SRO-T. If the result is success, the response message carries the Result which is Success; if the result is failure, then the response message carries the RESULT as a FAILURE and carries a failure reason, for example, an Wrong Session ID, a network error (Network Error), etc.
If I1 interface connection release is initiated by SRO-NH/SRO-H, the process is as follows:
   Step 3: the SRO-NH/SRO-H sends an I1 interface connection release request (I1 Release Request, corresponding to the first release request) to the SRO-T, and optionally, the request may carry a ReleaseReason, for example, Need to reconnect, Connection timeout, and the like;
   Step 4: the SRO-T returns an I1 interface connection release response message (corresponding to the first release response) to the SRO-NH/SRO-H. If the result is success, then the response message carries the Result which is Success; if the result is failure, then the response message carries the Result as a Failure and carries a failure reason, for example, Wrong Session ID, Unknown error, etc.

### Embodiment 2: I1 Interface Connection Release Procedure (I1 Release) embodiment

One possible definition of the I1 interface connection release process message format is:

| I1 interface connection release request (I1 Release Request) | | | |
|---|---|---|---|
| Information Element | Option | Quantity | Description |
| ReleaseReason | Optional | 0..1 | I1 interface connection release reason |
| | | | For example: Equipment Maintenance, Network Optimization, and the like |

| I1 interface connection release response (I1 Release Response) | | | |
|---|---|---|---|
| Information Element | Option | Quantity | Description |
| Result | Required | 1 | Result of I1 interface connection release |
| | | | Value is success or failure_{∘} |
| Reason | Conditionally optional | 0..1 | Reason of I1 interface connection release failure; |
| | | | This information element is Required when the I1 interface connection release fails; |
| | | | Value is for example Wrong Session id, Network error, and the like |

Taking the I1 interface connection between the SRO-T and SRO-NH/SRO-H as an example, it is assumed that in an embodiment, the SRO-T initiates a release I1 interface connection request due to equipment maintenance.

If the release connection is successful, the message interaction during release may be as follows:

| I1 interface connection release request (I1 Release Request) | | | |
|---|---|---|---|
| Information Element | Option | Quantity | value |
| ReleaseReason | Optional | 0..1 | Equipment Maintenance |

| I1 interface connection release response (I1 Release Response) | | | |
|---|---|---|---|
| Information Element | Option | Quantity | value |
| Result | Required | 1 | success |

If the release connection fails, the response message also carries a failure reason, such as a network error. The message interaction during the release process may be as follows:

| I1 interface connection release request (I1 Release Request) | | | |
|---|---|---|---|
| Information Element | Option | Quant ity | value |
| ReleaseReason | Optional | 0..1 | Equipment Maintenance |

| | | | |
|---|---|---|---|
| | | | |

| I1 interface connection release response (I1 Release Response) | | | |
|---|---|---|---|
| Information Element | Option | Quant ity | value |
| Result | Required | 1 | failure |
| Reason | Conditionally optional | 0..1 | Network error |

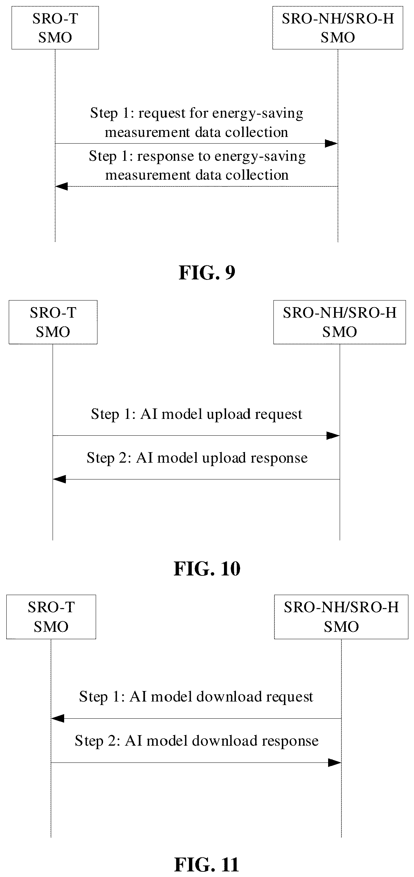

III. I1 Interface process 3: Energy-Saving Measurement Data Collection Process (ES Measurement Data Collection);
Energy-saving measurement data collection is used for collection and uploading of energy-saving-related measurement data for AI training and/or inference. The energy-saving measurement data collection process is shown in FIG. 9:
   Step 1: SRO-NH/SRO-H sends an energy-saving measurement data collection request (ES Measurement Data Collection Request, corresponding to request information for energy-saving measurement data collection) to SRO-T, where the request at least carries an SRO identifier (SRO ID) and a collection mode, and optionally carries an O-RU identifier (ORU ID);
   Step 2: the SRO-T returns an energy-saving measurement data collection response (ES Measurement Data Collection Response, corresponding to the response information for the energy-saving measurement data collection) to the SRO-NH/SRO-H. The return message carries at least the SRO identifier (SRO ID), which optionally carries an O-RU identifier (ORU ID). If successful, the response message carries the Result which is Success and carries energy-saving measurement data (ES Data); if the result is failure, then the response message carries the Result which is Failure and carries a failure reason, for example, an Access Denied, a Data Format Error (ES Data Format Error), and the like. When the data collection manner of the energy-saving measurement data collection request in step 1 is "subscription", the energy-saving data collection response in step 2 may be performed multiple times.

### Embodiment 3: Energy-Saving Measurement Data Collection Process (ES Measurement Data Collection) Embodiment

Taking the case in which the SRO-T collects data and uploads the data to the SRO-NH/SRO-H as an example, a possible definition manner of the energy-saving measurement data collection process message format is:

| ES Measurement Data Collection Request | | | |
|---|---|---|---|
| Information Element | Option | Quantity | Description |
| SRO ID | Required | 1 | SRO identifier |
| ORU ID | Optional | 1 | O-RU identifier |
| Collection Mode | Required | 1 | Data collection method |
| | | | Value is as follows. |
| | | | Query - query on demand, in which only one ES measurement data collection response exits; |
| | | | Subscription - subscription, in which if the subscription succeeds, there may be multiple ES measurement data collection responses periodically or in case of data change; |
| | | | Subscription Delete - deleting subscription. Data collection is stopped, and there is no subsequent measurement data collection response |

| ES Measurement Data Collection Response | | | |
|---|---|---|---|
| Information Element | Option | Quantity | Description |
| Result | Required | 1 | ES measurement data collection result |
| | | | Value is success or failure. |
| SRO ID | Required | 1 | SRO identifier |
| ORU ID | Optional | 1 | O-RU identifier |
| ES Data | Conditionally optional | 1 | ES measurement data; |
| | | | when the result of ES measurement data collection is successfully, this information element is Required. |
| Reason | Conditionally optional | 0..1 | Reason of ES measurement data collection failure; |
| | | | when the result of the ES measurement data collection is failure, this information element is Required; |
| | | | value is for example, Access denied, ES data format error, and the like |

It is assumed that in an embodiment, the SRO-NH/SRO-H sends an energy-saving measurement data collection request to the SRO-T, and the carried parameter in the request is: SRO identifier (SRO ID) is 456, ORU identifier (ORU ID) is 789, and the data collection mode is an on-demand query (query). The response message carries the SRO identifier (SRO ID) and the O-RU identifier (ORU ID), and the values are the same as those in the request message.

If the energy-saving measurement data is successfully collected, the response message further carries energy-saving measurement data (ES Data), including specific parameters related to energy-saving, for example, active users (active users), PRB utilization (PRB utilization), downlink and/or uplink throughput (DL/UL throughput), and the like. Message interaction in the energy-saving measurement data collection process may be as follows:

| ES Measurement Data Collection Request | | | |
|---|---|---|---|
| Information Element | Option | Quantity | value |
| SRO ID | Required | 1 | 456 |
| ORU ID | Optional | 1 | 789 |
| Collection Mode | Required | 1 | Query |

| ES Measurement Data Collection Response | | | |
|---|---|---|---|
| Information Element | Option | Quantity | value |
| Result | Required | 1 | success |
| SRO ID | Required | 1 | 456 |
| ORU ID | Optional | 1 | 789 |
| ES Data | Conditionally optional | 1 | ES measurement data |
| > Active users | Optional | 1 | 99 |
| > PRB utilization | Optional | 1 | 50% |
| > DL throughput | Optional | 1 | ... |
| | | | |

If the energy-saving measurement data collection fails, the response message further carries the failure reason, for example, a data format error (ES Data Format Error). Message interaction in the energy-saving measurement data collection process may be as follows:

| ES Measurement Data Collection Request | | | |
|---|---|---|---|
| Information Element | Option | Quantity | value |
| SRO ID | Required | 1 | 456 |
| ORU ID | Optional | 1 | 789 |
| Collection Mode | Required | 1 | Query |

| ES Measurement Data Collection Response | | | |
|---|---|---|---|
| Information Element | Option | Quantity | value |
| Result | Required | 1 | failure |
| SRO ID | Required | 1 | 456 |
| ORU ID | Optional | 1 | 789 |
| Reason | Conditionally optional | 0..1 | ES data format error |

IV: I1 interface process 4: an AI model upload process (Model Upload);
The AI model uploading process is used for a distributed training scenario, and a distributed node (SRO-T) uploads a local training model to a central node (SRO-NH/SRO-H). The model uploading process is shown in FIG. 10:
Step 1: the SRO-T sends an AI model upload request (Model Upload Request, corresponding to the request information for the AI model upload) to the SRO-NH/SRO-H, where the request at least carries the SRO identifier (SRO ID), the model ID, the current page index, the total pages, and the current page content of the local training model data, and optionally carries the O-RU identifier (ORU ID). When transmission is performed page by page, step 1 may be performed multiple times;
Step 2: the SRO-NH/SRO-H returns an AI model upload response message (Model Upload Response, corresponding to response information for the artificial intelligence AI model upload) to the SRO-T. The returned message at least carries an SRO identifier (SRO ID) and a model ID, and optionally carries an O-RU identifier (ORU ID). If the result is success, then the response message carries the Result which is Success; if the result is failure, then the response message carries the Result which is Failure and carries the failure reason, for example, an Access Denied, a Model Format Error, a Upload Timeout, etc.

### Embodiment 4: an AI model upload process (Model Upload) embodiment

Taking the case in which the SRO-T uploads the model to the SRO-NH/SRO-H as an example, a possible definition manner of the AI model upload process message format is:

| AI Model Upload Request | | | |
|---|---|---|---|
| Information Element | Option | Quantity | Description |
| SRO ID | Required | 1 | SRO identifier |
| ORU ID | Optional | 1 | O-RU identifier |
| Model ID | Required | 1 | Model identifier |
| Page Index | Required | 1 | Current block index; |
| | | | when model file data is transmitted, the data may be transmitted in blocks, and this is the current block index; a range of the value is 1-Total Pages; if being not transmitted in blocks, the value of this parameter is 1 |
| Total Pages | Required | 1 | Total quantity of blocks; |
| | | | If being transmitted in blocks, this is the total quantity of blocks for transmitting the model data; if not transmitted in blocks, this parameter is 1 |
| Model Data | Required | 1 | Local training model data; |
| | | | which may be a model parameter or model file data; |
| | | | if being transmitted in blocks, it may be content in the current block |

| AI Model Upload Response | | | |
|---|---|---|---|
| Information Element | Option | Quantity | Description |
| Result | Required | 1 | AI model upload result |
| | | | Value is success or failure. |
| SRO ID | Required | 1 | SRO identifier |
| ORU ID | Optional | 1 | O-RU identifier |
| Model ID | Required | 1 | Model identifier |
| Reason | Conditionally optional | 0..1 | AI model upload failure reason; |
| | | | This information element is Required when the AI model upload fails; |
| | | | Value is for example Access denied, |
| | | | Model format error, Upload timeout, and the like |

It is assumed that in an embodiment, the SRO-T sends an AI model uploading request to the SRO-NH/SRO-H, and the carried parameter in the request is that the SRO identifier (SRO ID) is 456, the ORU identifier (ORU ID) is 789, the Model ID is 777, and model data. The response message is returned, which carries the SRO identifier (SRO ID), the O-RU identifier (ORU ID) and the model ID, and the values thereof are the same as these in the request message.

If the AI model is successfully uploaded, the message interaction in the process of uploading the AI model may be as follows:

| AI Model Upload Request | | | |
|---|---|---|---|
| Information Element | Option | Quantity | value |
| SRO ID | Required | 1 | 456 |
| ORU ID | Optional | 1 | 789 |
| Model ID | Required | 1 | 777 |
| Page Index | Required | 1 | 1 |
| Total Pages | Required | 1 | 10 |
| Model Data | Required | 1 | Model parameter, or content in the current block of the model file |

| AI Model Upload Response | | | |
|---|---|---|---|
| Information Element | Option | Quantity | value |
| Result | Required | 1 | success |
| SRO ID | Required | 1 | 456 |
| ORU ID | Optional | 1 | 789 |
| Model ID | Required | 1 | 777 |

The model data in the request message adopts page-by-page transmission, only the first page is enumerated, the second to ten pages are similar to the first page, and the parameter of Page Index needs to be modified to the sequence number of the current page.

If the AI model fails to be uploaded, the response message further carries a reason of failure, for example, a Model format error. The message interaction in the AI model uploading process may be as follows:

| AI Model Upload Request | | | |
|---|---|---|---|
| Information Element | Option | Quantity | value |
| SRO ID | Required | 1 | 456 |
| ORU ID | Optional | 1 | 789 |
| Model ID | Required | 1 | 777 |
| Page Index | Required | 1 | 1 |
| Total Pages | Required | 1 | 10 |
| Model Data | Required | 1 | Model parameter, or content in the current block of the model file |

| AI Model Upload Response | | | |
|---|---|---|---|
| Information Element | Option | Quantity | value |
| Result | Required | 1 | failure |
| SRO ID | Required | 1 | 456 |
| ORU ID | Optional | 1 | 789 |
| Model ID | Required | 1 | 777 |
| Reason | Conditionally optional | 0..1 | Model format error |

V: I1 Interface process 5: AI Model Download;
The AI model download process is used in a distributed training scenario, and the central node (SRO-NH/SRO-H) distributes the aggregated model to the distributed node (SRO-T). The AI model download process is shown in FIG. 11:
Step 1: the SRO-NH/SRO-H sends an AI model download request (Model Download Request, corresponding to the request information for AI model download) to the SRO-T, where the request at least carries the SRO identifier (SRO ID), the model ID (Model ID), the current Page Index, the total pages (Total Pages), and the current page content of the aggregated model data (Model Data), and optionally carries the O-RU identifier (ORU ID). When page transmission is performed, step 1 may be performed multiple times;
Step 2: the SRO-T returns an AI Model Download Response to the SRO-NH/SRO-H (corresponding to the response information for the AI model download). The returned message at least carries an SRO identifier (SRO ID) and a model ID (Model ID), and optionally carries an O-RU identifier (ORU ID). If the result is success, the response message carries the Result which is Success; if the result is failure, then the response message carries the Result which is Failure and carries a failure reason, for example, an Access Denied, a Model Format Error, and a Download Timeout.

### Embodiment 5: An AI Model Download process

Taking as an example that the SRO-NH/SRO-H sends the download model to the SRO-T, a possible definition manner of the model download process message format is:

| AI Model Download Request | | | |
|---|---|---|---|
| Information Element | Option | Quantity | Description |
| SRO ID | Required | 1 | SRO identifier |
| ORU ID | Optional | 1 | O-RU identifier |
| Model ID | Required | 1 | Mode identifier |
| Page Index | Required | 1 | Current block index; |
| | | | When the model file data is transmitted, the data may be transmitted in blocks; and this is the index of the current block; the range of the value is 1-TotalPages; if not being transmitted in blocks, the parameter is 1. |
| Total Pages | Required | 1 | Total quantity of blocks; |
| | | | If being transmitted in blocks, it may be the total quantity of block needing to be transmitted for the model data; |
| | | | If not being transmitted in blocks, this parameter is 1 |
| Model Data | Required | 1 | Summarized model data; |
| | | | which may be model parameter or model file data; |

| | | | if being transmitted in blocks, this is the content in the current block |
|---|---|---|---|
| AI Model Download Response | | | |
| Information Element | Option | Quantity | Description |
| Result | Required | 1 | AI model download result, |
| | | | Value is success or failure |
| SRO ID | Required | 1 | SRO identifier |
| ORU ID | Optional | 1 | O-RU identifier |
| Model ID | Required | 1 | Model identifier |
| Reason | Conditionally optional | 0..1 | AI model download failure reason; |
| | | | When the AI model download fails, this information element is Required; |
| | | | Value is for example, Access denied, |
| | | | Model format error, Download timeout, and the like |

It is assumed that in an embodiment, the SRO-NH/SRO-H sends an AI model download request to the SRO-T, where the carried parameter in the request is that the SRO identifier (SRO ID) is 456, the ORU identifier (ORU ID) is 789, the model ID is 777, and model data (Model Data). The response message returned carries the SRO identifier (SRO ID), the O-RU identifier (ORU ID) and the model ID, and the values thereof are the same as those in the request message.

If the AI model download is successful, the message interaction in the AI model download process may be as follows:

| AI Model Download Request | | | |
|---|---|---|---|
| Information Element | Option | Quantity | value |
| SRO ID | Required | 1 | 456 |
| ORU ID | Optional | 1 | 789 |
| Model ID | Required | 1 | 777 |
| Page Index | Required | 1 | 1 |
| Total Pages | Required | 1 | 10 |
| Model Data | Required | 1 | Model parameter or content of the current block of the model file data |

| AI Model Download Response | | | |
|---|---|---|---|
| Information Element | Option | Quantity | value |
| Result | Required | 1 | success |
| SRO ID | Required | 1 | 456 |
| ORU ID | Optional | 1 | 789 |
| Model ID | Required | 1 | 777 |

The model data in the request message adopts page transmission, only the first page is enumerated, the second to ten pages are similar to the first page, and the parameter of the page index needs to be modified to the sequence number of the current page.

If the AI model download fails, the response message further carries a reason of failure, for example, a model format error. The message interaction in the AI model download process may be as follows:

| AI Model Download Request | | | |
|---|---|---|---|
| Information Element | Option | Quantity | value |
| SRO ID | Required | 1 | 456 |
| ORU ID | Optional | 1 | 789 |
| Model ID | Required | 1 | 777 |
| Page Index | Required | 1 | 1 |
| Total Pages | Required | 1 | 10 |
| Model Data | Required | 1 | Model parameter or content of the current block of the model file data |

| AI Model Download Response | | | |
|---|---|---|---|
| Information Element | Option | Quantity | value |
| Result | Required | 1 | failure |
| SRO ID | Required | 1 | 456 |
| ORU ID | Optional | 1 | 789 |
| Model ID | Required | 1 | 777 |
| Reason | Conditionally optional | 0..1 | Model format error |

### VI: I1 Interface Process 6: Energy-Saving Policy Coordination Process (ES Policy Coordination)

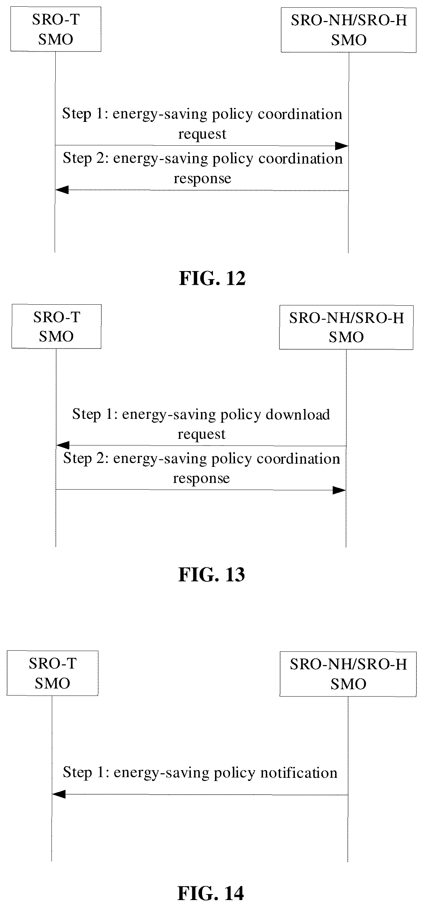

The energy-saving policy coordination process is used for the SRO-T to send to the SRO-NH/SRO-H a request that needs to be coordinated and optimized. The coordinated and optimized policy may be distributed to the SRO-T, or may be directly delivered and deployed from the SRO-NH/SRO-H, depending on the implementation. As shown in FIG. 12, the energy-saving policy coordination process is shown in FIG. 12:
Step 1: the SRO-T sends an Energy-Saving Policy Coordination Request (ES Policy Coordination Request, corresponding to the request information for energy-saving policy coordination) to the SRO-NH/SRO-H, where the request at least carries an SRO identifier (SRO ID), an ES policy ID, and an ES policy, and optionally carries an O-RU identifier (ORU ID);
Step 2: the SRO-NH/SRO-H returns an Energy-Saving Policy Coordination Response (ES Policy Coordination Response, corresponding to the above response information for the energy-saving policy coordination) to the SRO-T. The returned message at least carries an SRO identifier (SRO ID) and an ES policy identifier (ES policy ID), and optionally carries an O-RU identifier (ORU ID). If the result is success, then the response message carries the Result which is Success; if the result is failure, then the response message carries the Result as a FAILURE and carries a failure reason, for example, an Access Denied, a Policy Rejected, and the like.

### Embodiment 6: Energy-Saving Policy Coordination Process (ES Policy Coordination) Embodiment

One possible definition manner of the energy-saving policy coordination process message format is:

| ES Policy Coordination Request | | | |
|---|---|---|---|
| Information Element | Option | Quantity | Description |
| SRO ID | Required | 1 | SRO identifier |
| ORU ID | Optional | 1 | O-RU identifier |
| ES Policy ID | Required | 1 | ES policy identifier |
| ES Policy | Required | 1 | ES policy |
| | | | wherein for example, actual policy structure and parameter information both may be implemented differently. |
| >energy-saving-enabled | Optional | 1 | O-RU Power State |
| | | | Value: TRUE, FALSE |
| >admin-state | Optional | 1 | O-RU Admin State |
| | | | Value: locked, unlocked, shut-down |
| >active | Optional | 1 | O-RU Sleep Mode |
| | | | Value: SLEEP, INACTIVE, and the like |
| : | : | : | : |

| ES Policy Coordination Response | | | |
|---|---|---|---|
| Information Element | Option | Quantity | Description |
| Result | Required | 1 | ES Policy Coordination result, Value is success or failure |
| SRO ID | Required | 1 | SRO identifier |
| ORU ID | Optional | 1 | O-RU identifier |
| ES Policy ID | Required | 1 | ES policy identifier |
| Reason | Conditionally optional | 0..1 | ES policy coordination failure reason; |
| | | | This information element is Required when the ES policy coordination fails: |
| | | | Value is for example, Access denied, Policy rejected |

'Energy-saving-enabled' represents that energy-saving is enabled, 'O-RU Power State' represents an O-RU power state, 'admin-state' represents a management state, 'locked' represents locking, 'unlocked' represents unlocking, and 'shut-down' represents 'closed'; 'active' represents activation, 'O-RU Sleep Mode' represents an O-RU sleep mode, 'SLEEP' represents sleeping, and 'INACTIVE' represents inactive.

It is assumed that in an embodiment, the SRO-T sends an energy-saving policy coordination request to the SRO-NH/SRO-H, where the carried parameter in the request is that the SRO identifier (SRO ID) is 456, the ORU identifier (ORU ID) is 789, the energy-saving policy identifier (ES policy ID) is 888, and the energy-saving policy (ES policy). The response message that is returned carries the SRO identifier (SRO ID), the O-RU identifier (ORU ID), and the ES policy ID, and the values thereof are the same as those in the request message.

If the energy-saving policy coordination is successful, the message interaction in the energy-saving policy coordination process may be as follows:

| ES Policy Coordination Request | | | |
|---|---|---|---|
| Information Element | Option | Quantity | value |
| SRO ID | Required | 1 | 456 |
| ORU ID | Optional | 1 | 789 |
| ES Policy ID | Required | 1 | 888 |
| ES Policy | Required | 1 | ES policy data |
| > energy-saving-enabled | Optional | 1 | TRUE |
| : | : | : | : |

| ES Policy Coordination Response | | | |
|---|---|---|---|
| Information Element | Option | Quantity | value |
| Result | Required | 1 | success |
| SRO ID | Required | 1 | 456 |
| ORU ID | Optional | 1 | 789 |
| ES Policy ID | Required | 1 | 888 |

If the energy-saving policy coordination fails, then the response message also carries a reason of failure, for example, Policy rejected. Message interaction in the energy-saving policy coordination process may be as follows:

| ES Policy Coordination Request | | | |
|---|---|---|---|
| Information Element | Option | Quantity | value |
| SRO ID | Required | 1 | 456 |
| ORU ID | Optional | 1 | 789 |
| ES Policy ID | Required | 1 | 888 |
| ES Policy | Required | 1 | ES Policy |
| > energy-saving-enabled | Optional | 1 | TRUE |
| : | : | : | : |

| ES Policy Coordination Response | | | |
|---|---|---|---|
| Information Element | Option | Quantity | value |
| Result | Required | 1 | failure |
| SRO ID | Required | 1 | 456 |
| ORU ID | Optional | 1 | 789 |
| ES Policy ID | Required | 1 | 888 |
| Reason | Conditionally optional | 0..1 | Policy rejected |

VII: I1 Interface Process 7: Energy-Saving Policy Download Process (ES Policy Download);
The energy-saving policy download process is used for the SRO-NH/SRO-H to send the energy-saving policy to the SRO-T, which may be a coordinated optimization policy. The energy-saving policy download process is shown in FIG. 13:
Step 1: the SRO-NH/SRO-H sends an Energy-Saving Policy Download Request (ES Policy Download Request, corresponding to the request information for the energy-saving policy download) to the SRO-T, where the request at least carries an SRO identifier (SRO ID), an ES policy ID, and an ES policy, and optionally carries an O-RU identifier (ORU ID);
Step 2: the SRO-T returns an Energy-Saving Policy Download Response (ES Policy Download Response, corresponding to the above response information for energy-saving policy download) to the SRO-NH/SRO-H. The returned message at least carries an SRO identifier (SRO ID) and an ES policy identifier (ES policy ID), and optionally carries an O-RU identifier (ORU ID). If the result is success, then the response message carries the Result which is Success; if the result is failure, then the response message carries the Result which is failure and carries a failure reason, for example, an Access Denied, a Resource is not match, or the like.

### Embodiment 7: Energy-Saving Policy Download Process (ES Policy Download) Embodiment

One possible definition manner of the energy-saving policy download process message format is:

| ES Policy Download Request | | | |
|---|---|---|---|
| Information Element | Option | Quantity | Description |
| SRO ID | Required | 1 | SRO identifier |
| ORU ID | Optional | 1 | O-RU identifier |
| ES Policy ID | Required | 1 | ES policy identifier |
| ES Policy | Required | 1 | ES policy |
| | | | wherein, for example, the actual policy structure and the parameter information both may be implemented differently |
| >energy-saving-enabled | Optional | 1 | O-RU Power State |
| | | | value: TRUE, FALSE |
| >admin-state | Optional | 1 | O-RU Admin State |
| | | | value: locked, unlocked, shut-down |
| >active | Optional | 1 | O-RU Sleep Mode |
| | | | value: SLEEP, INACTIVE, and the like |
| : | : | : | : |

| ES Policy Download Response | | | |
|---|---|---|---|
| Information Element | Option | Quantity | Description |
| Result | Required | 1 | ES policy download result, Value is success or failure. |
| SRO ID | Required | 1 | SRO identifier |
| ORU ID | Optional | 1 | O-RU identifier |
| ES Policy ID | Required | 1 | ES policy identifier |
| Reason | Conditionally optional | 0..1 | Reason of ES policy download failure; |
| | | | This information element is Required, when the ES policy download fails; |
| | | | Value is for example, Access denied, Resource not match, and the like_{∘} |

It is assumed that in an embodiment, the SRO-NH/SRO-H sends an energy-saving policy download request to the SRO-T, where the carried parameter in the request is that the SRO identifier (SRO ID) is 456, that ORU identifier (ORU ID) is 789, that energy-saving policy identifier (ES policy ID) is 888, and energy-saving policy (ES policy). The response message that is returned carries the SRO identifier (SRO ID), the O-RU identifier (ORU ID), and the ES policy ID, and the values thereof are the same as those in the request message.

If the energy-saving policy download is successful, the message interaction in the energy-saving policy download process may be as follows:

| ES Policy Download Request | | | |
|---|---|---|---|
| Information Element | Option | Quantity | value |
| SRO ID | Required | 1 | 456 |
| ORU ID | Optional | 1 | 789 |
| ES Policy ID | Required | 1 | 888 |
| ES Policy | Required | 1 | ES policy data |
| > energy-saving-enabled | Optional | 1 | TRUE |
| : | : | : | : |

| ES Policy Download Response | | | |
|---|---|---|---|
| Information Element | Option | Quantity | value |
| Result | Required | 1 | success |
| SRO ID | Required | 1 | 456 |
| ORU ID | Optional | 1 | 789 |
| ES Policy ID | Required | 1 | 888 |

If the energy-saving policy download fails, then the response message also carries the failure reason, for example, Resource is not match. Message interaction in the energy-saving policy download process may be as follows:

| ES Policy Download Request | | | |
|---|---|---|---|
| Information Element | Option | Quantity | value |
| SRO ID | Required | 1 | 456 |
| ORU ID | Optional | 1 | 789 |
| ES Policy ID | Required | 1 | 888 |
| ES Policy | Required | 1 | ES policy |
| > energy-saving-enabled | Optional | 1 | TRUE |
| : | : | : | : |

| ES Policy Download Response | | | |
|---|---|---|---|
| Information Element | Option | Quantity | value |
| Result | Required | 1 | failure |
| SRO ID | Required | 1 | 456 |
| ORU ID | Optional | 1 | 789 |
| ES Policy ID | Required | 1 | 888 |
| Reason | Conditionally optional | 0..1 | Resource is not match |

VIII: I1 interface process 8: Energy-Saving Policy Notification Process (ES Policy Notification);
The energy-saving policy notification is configured so that the SRO-NH/SRO-H feeds back the execution status of energy-saving policy deployment to the SRO-T when the execution of the deployment is directly delivered by the SRO-NH/SRO-H. The energy-saving policy notification process is shown in FIG. 14.

Step 1: the SRO-NH/SRO-H sends an energy-saving policy notification message (ES Policy Notification, corresponding to the notification information for energy-saving policy deployment) to the SRO-T. The notification message at least carries an SRO identifier (SRO ID) and an ES policy identifier (ES policy ID), and optionally carries an O-RU identifier (ORU ID). If the execution of the energy-saving policy deployment is successful, the notification message carries the Result which is Success; and if the execution of the energy-saving policy deployment fails, the notification message carries the Result which is failure, and carries a failure reason, for example, Access denied, O-RU is busy, or the like.

### Embodiment 8: Energy Saving Policy Notification Process (ES Policy Notification) Embodiment

One possible definition manner of the energy-saving policy notification process message format is:

| ES Policy Notification | | | |
|---|---|---|---|
| Information Element | Option | Quantity | Description |
| Result | Required | 1 | A result of deployment of ES policy; |
| | | | Value is success or failure |
| SRO ID | Required | 1 | SRO identifier |
| ORU ID | Optional | 1 | O-RU identifier |
| ES Policy ID | Required | 1 | ES policy identifier |
| Reason | Conditionally optional | 0..1 | Reason of failure of ES policy deployment |
| | | | This information element is Required, when the result of deployment of ES policy fails; |
| | | | Value is for example, Access denied, O-RU is busy, and the like. |

It is assumed that in an embodiment, the SRO-NH/SRO-H sends an energy-saving policy notification to the SRO-T, and the carried parameter in the notification is that the SRO identifier (SRO ID) is 456, the ORU identifier (ORU ID) is 789, and the energy-saving policy identifier (ES policy ID) is 888.

If the energy-saving policy deployment is successfully executed, the message interaction in the energy-saving policy notification process may be as follows:

| ES Policy Notification | | | |
|---|---|---|---|
| Information Element | Option | Quantity | value |
| Result | Required | 1 | success |
| SRO ID | Required | 1 | 456 |
| ORU ID | Optional | 1 | 789 |
| ES Policy ID | Required | 1 | 888 |

If the energy-saving policy deployment fails, the reason of failure may also be carried, for example, O-RU is busy. Message interaction in the energy-saving policy notification process may be as follows:

| ES Policy Notification | | | |
|---|---|---|---|
| Information Element | Option | Quantity | Value |
| Result | Required | 1 | failure |
| SRO ID | Required | 1 | 456 |
| ORU ID | Optional | 1 | 789 |
| ES Policy ID | Required | 1 | 888 |
| Reason | Conditionally optional | 0..1 | O-RU is busy |

From above, for a deployment scenario in which the O-RU is shared by multiple operators, this solution defines a newly added interface I1 between shared resource operators (SRO) and a transmission process and method of information related to smart energy-saving based on the interface, and specifically relates to:
1) setup and release of the I1 interface;
2) collection and transmission of training and inference data related to energy-saving;
3) AI model transmission and download;
4) energy-saving policy information transmission;
5) policy coordination information transmission;
6) notification of feedback information of energy-saving policy deployment and execution, etc.

**In** summary, in this solution, for energy-saving characteristics of a scenario in which multiple operators share the O-RU, a method for transmitting information related to smart energy-saving between shared resource operators (SROs) is defined, which relates to transmission and exchange of information related to smart energy-saving such as training and inference data collection related to O-RAN energy-saving, AI model transmission, energy-saving policy transmission, policy coordination information transmission, and notification of feedback information of transmission and execution of policy coordination information, and the like, thereby expanding the capability of the SRO supporting network energy-saving. At present, in the O-RAN specification, the transmission of the information related to smart energy-saving of the relevant scene has not been defined or explicitly specified, and this solution is the enhancement of the SRO function and the supplement and perfection of the energy-saving-related specification in the O-RAN specification.

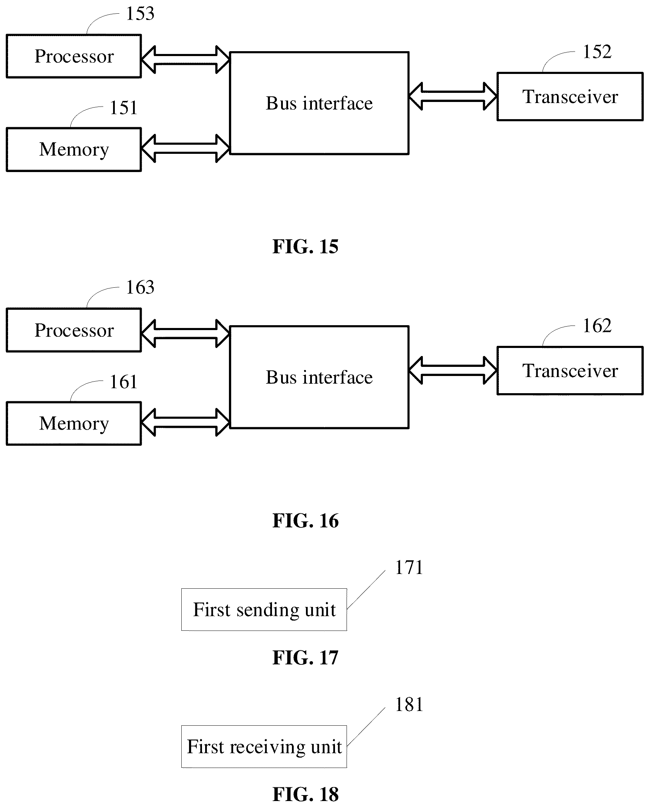

An embodiment of the present disclosure further provides an information transmission apparatus, applied to a first shared resource operator (SRO) device, as shown in FIG. 15, including a memory 151, a transceiver 152, and a processor 153. The memory 151 is configured to store a computer program; the transceiver 152 is configured to send and receive data under the control of the processor 153; and the processor 153 is configured to read the computer program in the memory 151 and perform the following operations: sending, by using the transceiver 152, first information related to energy-saving to a second SRO device via a target interface; wherein the target interface is a transmission interface between the first SRO device and the second SRO device.

The information transmission apparatus provided in this embodiment of the present disclosure sends first information related to energy-saving to the second SRO device by using the target interface; the target interface is a transmission interface between the first SRO device and the second SRO device; transmission of information related to energy-saving between the SRO devices in a scenario of sharing the O-RU can be supported, thereby ensuring that the energy-saving solutions can be determined by considering the energy-saving information of the SRO and other SROs, ensuring the rationality of the energy-saving solution in the scenario of sharing the O-RU, and well solving the problem in the related art that the rationality of the energy-saving solution cannot be ensured for a scenario of sharing the O-RU.

Specifically, the transceiver 152 is configured to receive and send data under the control of the processor 153.

In FIG. 15, the bus architecture may include any number of interconnected buses and bridges, and specifically, various circuits of one or more processors represented by the processor 153 and a memory represented by the memory 151 are linked together. The bus architecture may also link various other circuits, such as a peripheral device, a voltage regulator, and a power management circuit, which are well known in the art, and therefore are not further described herein. The bus interface provides an interface. The transceiver 152 may be a plurality of elements, including a transmitter and a receiver, and provides units for communicating with various other apparatuses on a transmission medium, where the transmission mediums include transmission media such as a wireless channel, a wired channel, and an optical cable. The processor 153 is responsible for managing the bus architecture and general processing, and the memory 151 may store data used by the processor 153 when performing operations.

The processor 153 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

Further, the operations further include: establishing a connection of the target interface with the second SRO device in a first manner; wherein the first manner includes at least one of following: (1) sending a first setup request to the second SRO device, and receiving a first setup response from the second SRO device; (2) receiving a second setup request from the second SRO device, and sending a second setup response to the second SRO device.

In an embodiment of the present disclosure, the operations further include: releasing the connection of the target interface with the second SRO device in a second manner; wherein the second manner includes at least one of following: (1) sending a first release request to the second SRO device, and receiving a first release response from the second SRO device; (2) receiving a second release request from the second SRO device, and sending a second release response to the second SRO device.

The first information includes at least one of the following: request information for energy-saving measurement data collection; response information for artificial intelligence (AI) model upload; request information for AI model download; response information for energy-saving policy coordination; request information for energy-saving policy download; or notification information for energy-saving policy deployment.

Further, the operations further include: receiving, by using the transceiver, second information from the second SRO device via the target interface; wherein the second information is response information or request information for the first information.

The second information includes at least one of the following: response information for energy-saving measurement data collection; request information for AI model upload; response information for AI model download; request information for energy-saving policy coordination; or response information for energy-saving policy download.

It should be noted that, the above-mentioned device provided in the embodiments of the present disclosure can implement all method steps implemented by the method embodiment of the first SRO device side, and can achieve the same technical effect, which will not be repeated here for the same parts and beneficial effects as the method embodiments in this embodiment.

An embodiment of the present disclosure further provides an information transmission apparatus applied to a second SRO device, as shown in FIG. 16, including a memory 161, a transceiver 162, and a processor 163. The memory 161 is configured to store a computer program; the transceiver 162 is configured to send and receive data under the control of the processor 163; and the processor 163 is configured to read the computer program in the memory 161 and perform the following operations: receiving, by using the transceiver 162, first information related to energy-saving from a first SRO device via a target interface; wherein the target interface is a transmission interface between the first SRO device and the second SRO device.

The information transmission apparatus provided in this embodiment of the present disclosure receives first information related to energy-saving from the first SRO device by using the target interface; the target interface is a transmission interface between the first SRO device and the second SRO device; transmission of information related to energy-saving between the SRO devices in a scenario of sharing the O-RU can be supported, thereby ensuring that the energy-saving solutions can be determined by considering the energy-saving information of the SRO and other SROs, ensuring the rationality of the energy-saving solution in the scenario of sharing the O-RU, and well solving the problem in the related art that the rationality of the energy-saving solution cannot be ensured for the scenario of sharing the O-RU.

Specifically, the transceiver 162 is configured to receive and send data under the control of the processor 163.

In FIG. 16, the bus architecture may include any number of interconnected buses and bridges, and specifically, various circuits of one or more processors represented by the processor 163 and a memory represented by the memory 161 are linked together. The bus architecture may also link various other circuits, such as a peripheral device, a voltage regulator, and a power management circuit, which are well known in the art, and therefore are not further described herein. The bus interface provides an interface. The transceiver 162 may be a plurality of elements, including a transmitter and a receiver, and provides units for communicating with various other apparatuses on a transmission medium, where the transmission mediums include transmission media such as a wireless channel, a wired channel, and an optical cable. The processor 163 is responsible for managing the bus architecture and general processing, and the memory 161 may store data used by the processor 163 when performing operations.

The processor 163 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

Further, the operations further include: establishing a connection of the target interface with the first SRO device in a first manner; wherein the first manner includes at least one of following: (1) receiving a first setup request from the first SRO device, and sending a first setup response to the first SRO device; (2) sending a second setup request to the first SRO device, and receiving a second setup response from the first SRO device.

In an embodiment of the present disclosure, the operations further include: releasing the connection of the target interface with the first SRO device in a second manner; wherein the second manner includes at least one of following: (1) receiving a first release request from the first SRO device, and sending a first release response to the first SRO device; (2) sending a second release request to the first SRO device, and receiving a second release response from the first SRO device.

The first information includes at least one of the following: request information for energy-saving measurement data collection; response information for artificial intelligence (AI) model upload; request information for AI model download; response information for energy-saving policy coordination; request information for energy-saving policy download; or notification information for energy-saving policy deployment.

Further, the operations further include: sending, by using the transceiver, second information to the first SRO device via the target interface; wherein the second information is response information or request information for the first information.

The second information includes at least one of the following: response information for energy-saving measurement data collection; request information for AI model upload; response information for AI model download; request information for energy-saving policy coordination; or response information for energy-saving policy download.

It should be noted that, the above apparatus provided in the embodiments of the present disclosure can implement all method steps implemented by the method embodiment of the second SRO device side, and can achieve the same technical effect, and details of the same parts and beneficial effects as those in the method embodiment in this embodiment are not described herein again.

An embodiment of the present disclosure further provides an information transmission apparatus, applied to a first shared resource operator (SRO) device, as shown in FIG. 17, the information transmission apparatus includes: a first sending unit 171, configured to send first information related to energy-saving to a second SRO device via a target interface; wherein the target interface is a transmission interface between the first SRO device and the second SRO device.

The information transmission apparatus provided in this embodiment of the present disclosure sends first information related to energy-saving to the second SRO device by using the target interface; the target interface is a transmission interface between the first SRO device and the second SRO device; transmission of information related to energy-saving between the SRO devices in a scenario of sharing the O-RU can be supported, thereby ensuring that the energy-saving solutions can be determined by considering the energy-saving information of the SRO and other SROs, ensuring the rationality of the energy-saving solution in the scenario of sharing the O-RU, and well solving the problem in the related art that the rationality of the energy-saving solution cannot be ensured for a scenario of sharing the O-RU.

Further, the information transmission apparatus further includes: a first establishing unit, configured to establish a connection of the target interface with the second SRO device in a first manner; wherein the first manner includes at least one of following: (1) sending a first setup request to the second SRO device, and receiving a first setup response from the second SRO device; (2) receiving a second setup request from the second SRO device, and sending a second setup response to the second SRO device.

**In** an embodiment of the present disclosure, the information transmission apparatus further includes: a first release unit, configured to release the connection of the target interface with the second SRO device in a second manner; wherein the second manner includes at least one of following: (1) sending a first release request to the second SRO device, and receiving a first release response from the second SRO device; (2) receiving a second release request from the second SRO device, and sending a second release response to the second SRO device..

The first information includes at least one of the following: request information for energy-saving measurement data collection; response information for artificial intelligence (AI) model upload; request information for AI model download; response information for energy-saving policy coordination; request information for energy-saving policy download; or notification information for energy-saving policy deployment.

Further, the information transmission apparatus further includes: a first receiving unit, configured to second information from the second SRO device via the target interface; wherein the second information is response information or request information for the first information.

The second information includes at least one of the following: response information for energy-saving measurement data collection; request information for AI model upload; response information for AI model download; request information for energy-saving policy coordination; or response information for energy-saving policy download.

It should be noted that, the apparatus provided in the embodiments of the present disclosure can implement all method steps implemented by the method embodiment of the first SRO device side, and can achieve the same technical effect, and details of the same parts and beneficial effects as those in the method embodiments in this embodiment are not described herein again.

An embodiment of the present disclosure further provides an information transmission apparatus, applied to a second SRO device, as shown in FIG. 18, the apparatus includes: a second receiving unit 181, configured to receive, through a target interface, first information related to energy-saving from a first SRO device; and the target interface is a transmission interface between the first SRO device and the second SRO device.

The information transmission apparatus provided in this embodiment of the present disclosure receives first information related to energy-saving from the first SRO device by using the target interface; the target interface is a transmission interface between the first SRO device and the second SRO device; transmission of information related to energy-saving between the SRO devices in a scenario of sharing the O-RU can be supported, thereby ensuring that the energy-saving solutions can be determined by considering the energy-saving information of the SRO and other SROs, ensuring the rationality of the energy-saving solution in the scenario of sharing the O-RU, and well solving the problem in the related art that the rationality of the energy-saving solution cannot be ensured for the scenario of sharing the O-RU.

Further, the information transmission apparatus further includes: a second establishment unit, configured to establish a connection of the target interface with the first SRO device in a first manner; wherein the first manner includes at least one of following: (1) receiving a first setup request from the first SRO device, and sending a first setup response to the first SRO device; (2) sending a second setup request to the first SRO device, and receiving a second setup response from the first SRO device.

In an embodiment of the present disclosure, the information transmission apparatus further includes: a second release unit, configured to release the connection of the target interface with the first SRO device in a second manner; wherein the second manner includes at least one of following: (1) receiving a first release request from the first SRO device, and sending a first release response to the first SRO device; (2) sending a second release request to the first SRO device, and receiving a second release response from the first SRO device.

The first information includes at least one of the following: request information for energy-saving measurement data collection; response information for artificial intelligence (AI) model upload; request information for AI model download; response information for energy-saving policy coordination; request information for energy-saving policy download; or notification information for energy-saving policy deployment.

Further, the information transmission apparatus further includes: a second sending unit, configured to send second information to the first SRO device via the target interface; wherein the second information is response information or request information for the first information.

The second information includes at least one of the following: response information for energy-saving measurement data collection; request information for AI model upload; response information for AI model download; request information for energy-saving policy coordination; or response information for energy-saving policy download.

It should be noted that, the above apparatus provided in the embodiments of the present disclosure can implement all method steps implemented by the method embodiment of the second SRO device side, and can achieve the same technical effect, and details of the same parts and beneficial effects as those in the method embodiment in this embodiment are not described herein again.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

An embodiment of the present disclosure further provides a processor-readable storage medium, where the processor-readable storage medium stores a computer program, and the computer program is configured to cause the processor to perform the information transmission method on the first SRO device side or the second SRO device side.

The processor-readable storage medium may be any usable medium or data storage device accessible by a processor, including but not limited to a magnetic memory (for example, a floppy disk, a hard disk, a magnetic tape, a magneto-optical disk (DVD), a Blu-ray disk (BD), a High-Definition Versatile Disk (DVD), a Blu-ray disk (Blu-ray Disk, BD), a High-Definition Versatile Disk (EPROM), an Electrically Erasable Programmable Read Only Memory (EEPROM), a non-volatile memory (NAND Flash), a Solid State Disk (SSD)), and the like.

The implementation of the information transmission method on the first SRO device side or the second SRO device side is applicable to the embodiment of the processor-readable storage medium, and can also achieve the same technical effect.

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing devices generate means for implementing the functions specified in one or more flows of the flowcharts and/or one or more blocks in the block diagrams.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. An information transmission method applied to a first shared resource operator (SRO) device, comprising:
sending first information related to energy-saving to a second SRO device via a target interface;
wherein the target interface is a transmission interface between the first SRO device and the second SRO device.

2. The information transmission method according to claim 1, further comprising:
establishing a connection of the target interface with the second SRO device in a first manner;
wherein the first manner comprises:
sending a first setup request to the second SRO device, and receiving a first setup response from the second SRO device; and/or
receiving a second setup request from the second SRO device, and sending a second setup response to the second SRO device.

3. The information transmission method according to claim 2, further comprising:
releasing the connection of the target interface with the second SRO device in a second manner;
wherein the second manner comprises:
sending a first release request to the second SRO device, and receiving a first release response from the second SRO device;
and/or
receiving a second release request from the second SRO device, and sending a second release response to the second SRO device.

4. The information transmission method according to claim 1, wherein the first information comprises at least one of the following:
request information for energy-saving measurement data collection;
response information for artificial intelligence (AI) model upload;
request information for AI model download;
response information for energy-saving policy coordination;
request information for energy-saving policy download; or
notification information for energy-saving policy deployment.

5. The information transmission method according to claim 1 or 4, further comprising:
receiving second information from the second SRO device via the target interface; wherein the second information is response information or request information for the first information.

6. The information transmission method according to claim 5, wherein the second information comprises at least one of the following:
response information for energy-saving measurement data collection;
request information for AI model upload;
response information for AI model download;
request information for energy-saving policy coordination; or
response information for energy-saving policy download.

7. An information transmission method applied to a second SRO device, comprising:
receiving first information related to energy-saving from a first SRO device via a target interface;
wherein the target interface is a transmission interface between the first SRO device and the second SRO device.

8. The information transmission method according to claim 7, further comprising:
sending second information to the first SRO device via the target interface; wherein the second information is response information or request information for the first information.

9. An information transmission apparatus applied to a first shared resource operator (SRO) device, comprising:
a memory, a transceiver, and a processor,
wherein the memory is configured to store a computer program; the transceiver is configured to send and receive data under the control of the processor; and the processor is configured to read the computer program in the memory and perform operations comprising:
sending, by using the transceiver, first information related to energy-saving to a second SRO device via a target interface; wherein the target interface is a transmission interface between the first SRO device and the second SRO device.

10. The information transmission apparatus according to claim 9, wherein the operations further comprise:
establishing a connection of the target interface with the second SRO device in a first manner;
wherein the first manner comprises:
sending a first setup request to the second SRO device, and receiving a first setup response from the second SRO device; and/or
receiving a second setup request from the second SRO device, and sending a second setup response to the second SRO device.

11. The information transmission apparatus according to claim 10, wherein the operations further comprise:
releasing the connection of the target interface with the second SRO device in a second manner;
wherein the second manner comprises:
sending a first release request to the second SRO device, and receiving a first release response from the second SRO device;
and/or
receiving a second release request from the second SRO device, and sending a second release response to the second SRO device.

12. The information transmission apparatus according to claim 9, wherein the first information comprises at least one of the following:
request information for energy-saving measurement data collection;
response information for artificial intelligence (AI) model upload;
request information for AI model download;
response information for energy-saving policy coordination;
request information for energy-saving policy download; or
notification information for energy-saving policy deployment.

13. The information transmission apparatus according to claim 9 or 12, wherein the operations further comprise:
receiving second information from the second SRO device via the target interface by using the transceiver; wherein the second information is response information or request information for the first information.

14. The information transmission apparatus according to claim 13, wherein the second information comprises at least one of the following:
response information for energy-saving measurement data collection;
request information for AI model upload;
response information for AI model download;
request information for energy-saving policy coordination; or
response information for energy-saving policy download.

15. An information transmission apparatus applied to a second SRO device, comprising: a memory, a transceiver, and a processor,
wherein the memory is configured to store a computer program; the transceiver is configured to send and receive data under the control of the processor; and the processor is configured to read the computer program in the memory and perform operations comprising:
receiving first information related to energy-saving from a first SRO device via a target interface by using the transceiver;
wherein the target interface is a transmission interface between the first SRO device and the second SRO device.

16. The information transmission apparatus according to claim 15, wherein the operations further comprise:
sending second information to the first SRO device via the target interface by using the transceiver; wherein the second information is response information or request information for the first information.

17. An information transmission apparatus applied to a first shared resource operator (SRO) device, comprising:
a first sending unit, configured to send first information related to energy-saving to a second SRO device via a target interface;
wherein the target interface is a transmission interface between the first SRO device and the second SRO device,
wherein the target interface is a transmission interface between the first SRO device and the second SRO device.

18. The information transmission apparatus according to claim 17, further comprising:
a first establishing unit, configured to establish a connection of the target interface with the second SRO device in a first manner;
wherein the first manner comprises:
sending a first setup request to the second SRO device, and receiving a first setup response from the second SRO device; and/or
receiving a second setup request from the second SRO device, and sending a second setup response to the second SRO device.

19. The information transmission apparatus according to claim 18, further comprising:
a first releasing unit, configured to release the connection of the target interface with the second SRO device in a second manner;
wherein the second manner comprises:
sending a first release request to the second SRO device, and receiving a first release response from the second SRO device;
and/or
receiving a second release request from the second SRO device, and sending a second release response to the second SRO device.

20. The information transmission apparatus according to claim 17, wherein the first information comprises at least one of the following:
request information for energy-saving measurement data collection;
response information for artificial intelligence (AI) model upload;
request information for AI model download;
response information for energy-saving policy coordination;
request information for energy-saving policy download; or
notification information for energy-saving policy deployment.

21. The information transmission apparatus according to claim 17 or 20, further comprising:
a first receiving unit, configured to receive second information from the second SRO device via the target interface; wherein the second information is response information or request information for the first information.

22. The information transmission apparatus according to claim 21, wherein the second information comprises at least one of the following:
response information for energy-saving measurement data collection;
request information for AI model upload;
response information for AI model download;
request information for energy-saving policy coordination; or
response information for energy-saving policy download.

23. An information transmission apparatus applied to a second SRO device, comprising:
a second receiving unit, configured to receive first information related to energy-saving from a first SRO device via a target interface;
wherein the target interface is a transmission interface between the first SRO device and the second SRO device.

24. The information transmission apparatus according to claim 23, further comprising:
a second sending unit, configured to send second information to the first SRO device via the target interface; wherein the second information is response information or request information for the first information.

25. A processor-readable storage medium storing a computer program, wherein the computer program is configured to cause a processor to perform the information transmission method according to any one of claims 1 to 8.
